# FASCICULE DE BREVET EUROPEEN

(11) **EP 3 585 644 B1**
(45) Date de publication et mention de la délivrance du brevet: **02.06.2021**
(21) Numéro de dépôt: 18713303.8
(22) Date de dépôt: 21.02.2018
(51) Int. Cl.: B60N 2/24, B60N 2/42, F41H 7/04

(54) **SIEGE POUR VEHICULE COMPORTANT AU MOINS UN MOYEN D'AMORTISSEMENT**
FAHRZEUGSITZ MIT MINDESTENS EINEM DÄMPFUNGSMITTEL
SEAT FOR A VEHICLE, COMPRISING AT LEAST ONE DAMPING MEANS

(30) Priorité: 24.02.2017 FR 1700189
(43) Date de publication de la demande: 01.01.2020
(73) Titulaire: NEXTER Systems, 78034 Versailles Cedex (FR)
(72) Inventeur: TANTY, Fabien, 18023 Bourges (FR); LEBAILLIF, David, 18023 Bourges (FR); MALLAT, Didier, 18023 Bourges (FR); CARRIE, Sébastien, 18023 Bourges (FR); DRESSY, Jean-Claude, 18023 Bourges (FR)
(74) Mandataire: Cabinet Chaillot
(86) Numéro de dépôt international: PCT/FR2018/050403
(87) Numéro de publication internationale: WO 2018/154231

(56) Documents cités:
- EP-A1- 2 857 260
- EP-A2- 2 028 040
- FR-A1- 2 932 428

## Description

Le domaine technique de l'invention est celui des sièges pour véhicule et plus particulièrement des sièges destinés à équiper les véhicules blindés.

Les véhicules blindés sont fréquemment amenés sur les terrains d'opérations à être confrontés à des mines et des IED (selon l'acronyme anglo saxon "Improvised Explosive Devices") ou bien en français EEI (Engins Explosifs Improvisés). Ces IED génèrent des sollicitations importantes sur les véhicules visés par leur explosion.

Les chocs reçus alors par la structure, et en particulier le plancher des véhicules, sont considérables et on cherche généralement lorsque l'on conçoit les sièges du véhicule à les isoler du plancher.

Cependant les chocs reçus par la cabine du véhicule communiquent aux sièges une accélération dont le niveau excessif peut provoquer de graves blessures, en particulier à la colonne vertébrale.

Il est connu par le brevet FR2932428 de réaliser un siège dont l'assise pivotante est reliée au support de siège par un moyen de liaison qui assure, en cas d'effort d'un niveau prédéterminé, la libération d'une butée de l'assise et le pivotement de cette dernière au-delà de la position dépliée.

Une telle disposition permet de ne pas soumettre la personne occupant le siège à un choc de niveau supérieur à celui libérant les butées de l'assise. La personne tombe sur le plancher de la cabine mais après l'instant critique où les efforts sont maximaux.

Ce dispositif permet ainsi d'écrêter les efforts maximaux que pourrait subir l'occupant du siège. La butée est bien entendu calibrée pour que la rupture intervienne pour un niveau de choc évitant toute blessure. Ces niveaux de chocs sont bien connus et ont fait l'objet de nombreuses publications. On pourra par exemple considérer la thèse de Gaurav Nilakantan publiée le 08/03/2006 qui cite des valeurs de charge maximale sur la colonne lombaire à 6672 Newton.

On pourra aussi consulter le rapport technique OTAN d'avril 2007 sur la « méthodologie d'essais pour la protection des occupants de véhicules contre les effets des mines terrestres anti véhicules » qui donne lui aussi les niveaux de tolérance de la colonne lombaire. Ces éléments sont aussi précisés par la norme OTAN : STANAG 4569 AEP55 volume 2.

Si cette rupture de la butée de l'assise protège efficacement l'occupant du siège contre les effets dus à l'accélération communiquée à l'assise par l'explosion de l'engin explosif, il est souhaitable d'améliorer la protection de l'occupant en limitant les efforts résiduels induits par un rebond brutal de l'assise qui, une fois libérée, heurte le plancher ou les supports du siège, et se trouve projetée vers l'occupant du siège.

C'est le but de l'invention que de proposer un siège de véhicule permettant de pallier de tels inconvénients.

Le siège selon l'invention est ainsi de structure simple et assure un excellent niveau de protection vis à vis des chocs reçus par le véhicule lors de l'explosion d'une mine ou d'un IED tout en empêchant les blessures pouvant être occasionnées par un rebond de l'assise.

Ainsi l'invention a pour objet un siège pour véhicule, comportant une assise montée pivotante par rapport à au moins un support fixe entre une position repliée où elle est sensiblement verticale et une position dépliée où elle est en appui sur au moins une première butée et se trouve sensiblement horizontale, l'assise coopérant avec le (ou les) support(s) fixe(s) par un moyen assurant en cas d'effort d'un niveau prédéterminé la libération de la (ou des) première(s) butée(s) et le pivotement de l'assise au-delà de la position déployée, siège caractérisé en ce qu'il comprend au moins un moyen d'amortissement de la course de l'assise après libération de la (ou des) première(s) butée(s).

Selon un mode particulier de réalisation, le siège comprend au moins une deuxième butée limitant l'ouverture maximale de l'assise.

Avantageusement, le moyen d'amortissement de la course pourra incorporer un moyen de blocage anti retour.

Selon un mode de réalisation, le moyen d'amortissement de la course pourra comprendre au moins une lame coopérant lors du pivotement de l'assise avec au moins une surface comportant un profil incliné venant interférer avec la lame lors du mouvement de pivotement, provoquant ainsi le fléchissement de la lame, la ou les lames et le ou les profils inclinés formant le moyen d'amortissement de la course de l'assise.

La surface coopérant avec la lame pourra être portée par une plaque ayant un plan sensiblement perpendiculaire au plan de la lame.

Avantageusement, la ou les plaques pourront être fixées de façon démontable.

Selon une autre caractéristique, le profil incliné de la plaque pourra se terminer par une saillie formant la deuxième butée.

Selon un mode particulier de réalisation, la ou les plaques pourront être solidaires du support fixe et la ou les lames pourront être solidaires de l'assise.

Une disposition inverse serait bien entendu possible avec la ou les lames solidaires du support fixe et la ou les plaques solidaires de l'assise.

Selon un mode particulier de réalisation, le moyen d'amortissement de la course de l'assise pourra comprendre au moins une chape formée de deux lames qui coopèrent chacune avec une surface du support fixe comportant un profil incliné venant interférer avec ladite lame lors du mouvement de pivotement.

La première butée pourra coopérer avec un axe ayant une réduction de section calibrée et venant en appui contre la première butée, lors du pivotement de l'assise et avant engagement du moyen d'amortissement de la course.

L'invention sera mieux comprise à la lecture de la description qui va suivre d'un mode particulier de réalisation, description faite en référence aux dessins annexés et dans lesquels :
- Les figures 1a et 1b montrent de façon schématique une partie de l'assise d'un siège selon l'invention articulée sur son support fixe, l'assise étant en position dépliée, la figure la étant une vue suivant le plan dont la trace AA est visible à la figure 1b et la figure 1b étant une coupe suivant le plan dont la trace BB est visible à la figure la ;
- La figure 1c est une vue d'une des plaques seule ;
- Les figures 2a et 2b montrent cette même assise après libération de la première butée, la figure 2a étant une vue suivant le plan dont la trace AA est visible à la figure 2b et la figure 2b étant une coupe suivant le plan dont la trace BB est visible à la figure 2a ;
- Les figures 3a et 3b montrent cette même assise lorsqu'elle commence à engager le moyen d'amortissement, la figure 3a étant une vue suivant le plan dont la trace AA est visible à la figure 3b et la figure 3b étant une coupe suivant le plan dont la trace BB est visible à la figure 3a ;
- Les figures 4a et 4b montrent cette même assise lorsqu'elle est en contact avec la deuxième butée, la figure 4a étant une vue suivant le plan dont la trace AA est visible à la figure 4b et la figure 4b étant une coupe suivant le plan dont la trace BB est visible à la figure 4a.

En se reportant aux figures la et 1b, un siège 1 pour véhicule est représenté très schématiquement et il comporte une assise 2 qui est montée pivotante par rapport à un support 3 fixe entre une position repliée où elle est sensiblement verticale (position non représentée) et une position dépliée où elle se trouve sensiblement horizontale (la position selon les figures la et 1b).

L'assise est représentée ici de façon simplifiée sous la forme d'un seul montant latéral 2a. En fait le siège complet pourra comporter deux montants 2a parallèles, qui seront chacun articulé par rapport à un support 3 distinct.

Le siège 1 pourra ainsi comporter une platine (non représentée) qui sera fixée aux deux montants 2a et qui permettra de recevoir un usager.

Selon l'application envisagée, un siège complet pourra donc comporter deux montants 2a parallèles l'un à l'autre, chaque montant étant pivotant par rapport à un support 3.

Il est cependant possible de définir un siège ne comportant qu'un seul montant pivotant par rapport à un support unique.

Dans la suite de la description et pour la simplification de la présentation du fonctionnement, on désignera souvent par assise le seul montant 2a, que ce montant soit unique ou bien doublé.

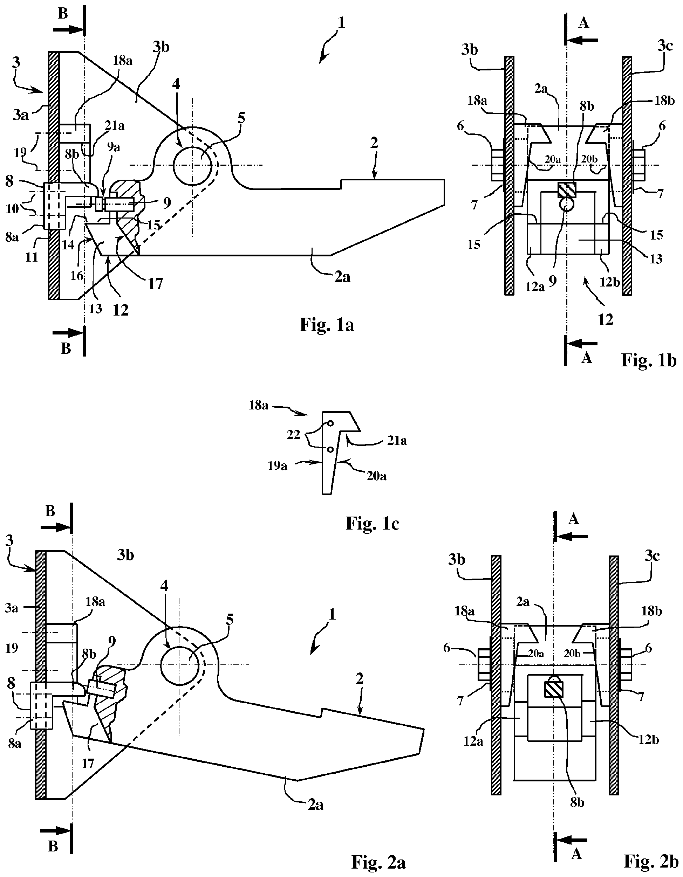

Le support 3 est ici réalisé sous la forme d'un étrier en tôle pliée et qui comporte une base 3a et deux ailes 3b et 3c qui sont perpendiculaires à la base 3a. La base 3a est fixée par des moyens non représentés (tels que des vis) à une paroi du véhicule ou à un montant, fixé par exemple au plafond du véhicule. Chaque aile 3b, 3c porte un perçage 4 qui reçoit un axe 5 permettant le pivot de l'assise 2 par rapport au support 3. La figure 1b montre les têtes de vis 6 qui maintiennent l'axe 5 par rapport aux ailes 3b et 3c. Une rondelle 7 est interposée entre chaque tête de vis 6 et l'aile 3b ou 3c considérée. Bien entendu un jeu fonctionnel est maintenu entre la rondelle 7 et l'aile 3b ou 3c pour permettre le pivotement de l'assise 2.

Comme on le voit sur la figure 1a, lorsque l'assise 2 est en position dépliée, elle est en appui contre un arrêtoir 8 sur lequel vient s'appuyer un axe 9 porté par l'assise 2.

Cet arrêtoir 8 comprend un corps 8a qui est fixé à la base 3a du support 3 par des vis (dont seuls les axes 10 sont représentés). Le corps 8a traverse la base 3a au niveau d'une fente 11 et les vis sont portées par un repli (non visible sur la figure) qui est perpendiculaire au plan de la figure la et qui vient en appui contre la base 3a.

L'arrêtoir 8 comprend un bec 8b qui s'étend perpendiculairement au corps 8a et en direction de l'assise 2. L'extrémité de l'axe 9 vient en appui contre le bec 8b qui constitue une première butée pour l'assise 2.

Comme on le voit sur la figure 1a, l'axe 9 comporte une réduction de section 9a qui est calibrée. Cette réduction de section est définie conformément à l'enseignement du brevet FR2932428 cité au préambule du présent texte.

Ainsi lorsqu'un effort supérieur à un certain niveau s'exerce verticalement de haut en bas sur l'assise 2 (effort d'inertie consécutif à l'explosion de la mine), cet effort se communique à la butée 8b et provoque la rupture de l'axe 9, donc la libération de la butée 8b de l'assise. Cette libération permet le pivotement de l'assise 2 au-delà de la position dépliée représentée figure la.

Une telle disposition permet de ne pas soumettre la personne occupant le siège à un choc de niveau supérieur à celui libérant les butées de l'assise. La personne (qui est par ailleurs attachée au siège par un harnais non représenté) descend sur le plancher de la cabine mais après l'instant critique où les efforts sont maximaux.

On écrête ainsi les efforts maximaux que pourrait subir l'occupant du siège. L'axe 9 et sa réduction de section 9a sont bien entendu calibrés pour que la rupture de l'axe 9 intervienne pour un niveau de choc évitant toute blessure.

Il est bien entendu possible, à titre de variante, de prévoir sur l'assise 2 un axe 9 non fragilisé et qui coopèrera avec un bec 8b qui portera la fragilisation calibrée souhaitée.

Conformément à l'invention, le siège 1 comprend également au moins un moyen d'amortissement de la course de l'assise après libération de la première butée 8b.

Selon le mode de réalisation qui est décrit ici, le moyen d'amortissement de la course comprend une chape 12 qui est portée par une partie arrière du montant 2a de l'assise 2.

La chape 12 est plus particulièrement visible à la figure 1b. Elle comporte deux lames 12a, 12b séparées par un espace 13. On voit à la figure la que les lames 12a et 12b ont une extrémité formant une pointe 14 qui est délimitée par une face supérieure 15 et une face externe 16. La face supérieure 15 est sensiblement parallèle au bec 8b dans la position dépliée de la figure la (donc sensiblement horizontale). La face externe 16 forme un angle inférieur à 90° par rapport à la face supérieure 15 (pour éviter toute interférence mécanique lors du pivotement de l'assise 2).

L'espace 13 est délimité par les lames 12a et 12b et par un plan incliné 17, permettant lui aussi d'éviter les interférences mécaniques lors du pivotement de l'assise 2.

Par ailleurs le support 3 porte deux plaques 18a et 18b qui sont fixées à la base 3a du support 3 par des vis (dont seuls les axes 19 sont représentés figure 1a).

Comme on le voit à la figure 1b, ces plaques 18a et 18b ont une forme plane et le plan des plaques s'étend entre les ailes 3b et 3c du support 3 en direction des lames 12a et 12b de la chape 12 et sensiblement perpendiculairement aux plans des lames 12a, 12b.

La figure 1c montre la plaque 18a seule pour faciliter la compréhension de sa forme. La plaque 18b est identique à la plaque 18a et elle est fixée sur l'aile 3c d'une façon symétrique par rapport à un plan médian parallèle aux ailes 3b et 3c.

On voit ainsi que la plaque 18a (ou 18b) comprend une surface de base 19a (ou 19b) qui vient s'encastrer contre l'aile 3b ou 3c du support 3. La plaque 18a (ou 18b) comprend une surface latérale 20a (ou 20b) qui est inclinée par rapport à la surface de base 19a (ou 19b). La surface latérale 20a (ou 20b) se termine par une surface frontale 21a (ou 21b) perpendiculaire à la surface de base 19a (ou 19b). La surface frontale 21a (ou 21b) constitue une saillie formant une deuxième butée destinée à limiter l'ouverture maximale de l'assise 2. Le repère 22 désigne les trous permettant la fixation de la plaque 18a (ou 18b) sur le support 3.

Les surfaces latérales 20a et 20b des plaques 18a et 18b sont destinées à coopérer avec les lames 12a et 12b pour amortir la course de l'assise 2.

Les figures 2a et 2b montrent l'assise 2 après libération de la première butée 8b (donc après cisaillement de l'axe 9). L'assise 2 peut donc continuer à pivoter, entraînée par le poids de l'utilisateur.

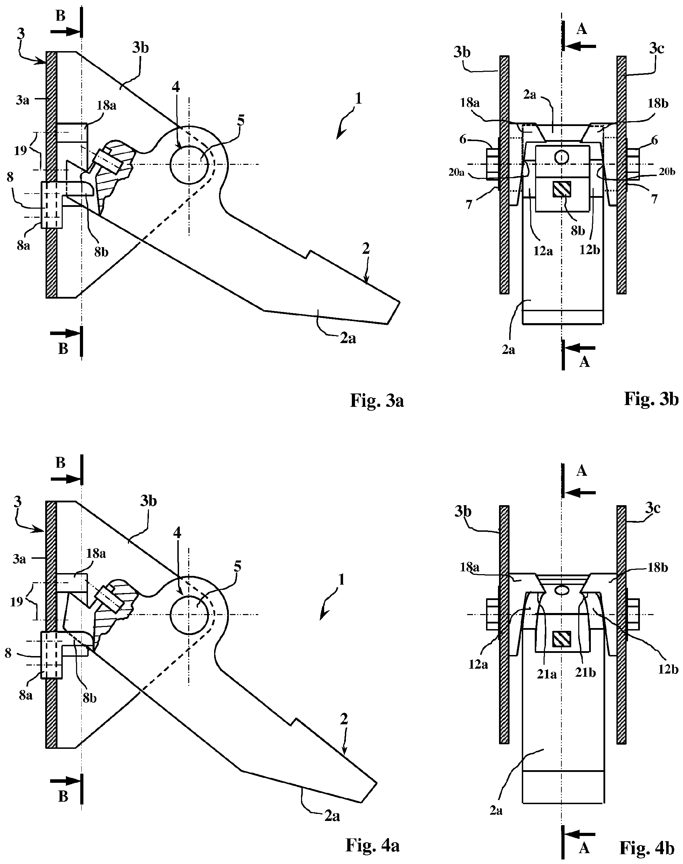

Les figures 3a et 3b montrent l'assise 2 lorsqu'elle commence à engager le moyen d'amortissement. La chape 12 s'engage entre les plaques 18a et 18b portées par le support 3. Les plaques 18a et 18b viennent alors s'opposer à la poursuite du mouvement de pivotement de l'assise 2. Chaque lame 12a ou 12b vient en appui contre une surface latérale inclinée 20a ou 20b d'une plaque 18a ou 18b. Les surfaces latérales inclinées 20a et 20b viennent interférer avec les lames 12a et 12b de la chape 12 lors du mouvement de pivotement de l'assise 2, provoquant ainsi l'érosion des plaques 18a et 18b et la déformation des lames 12a et 12b.

Les lames 12a et 12b (donc la chape 12) et les profils inclinés 20a et 20b forment ainsi un moyen d'amortissement de la course de l'assise 2.

Les caractéristiques dimensionnelles et mécaniques de chaque lame 12a,12b sont définies de telle façon que chaque lame consomme par sa déformation une partie de l'énergie communiquée par l'assise 2 à travers les contacts des lames 12a,12b avec les plaques 18a et 18b.

Les figures 4a et 4b montrent enfin l'assise 2 lorsque les lames 12a et 12b arrivent en contact avec la deuxième butée 21a ou 21b de la plaque 18a ou 18b.

On remarque que les lames 12a et 12b sont à leur déformation maximale. La deuxième butée 21a,21b permet de limiter l'ouverture maximale possible pour l'assise 2.

Le moyen d'amortissement 12,20a,20b permet ainsi de freiner la vitesse de rotation de l'assise 2 pendant son pivotement. On ajoute ainsi un amortissement du mouvement de l'assise lors du glissement de l'occupant sur son siège. On maîtrise ainsi mieux l'interaction entre l'occupant et le siège lors d'un choc dû à l'explosion d'une mine. On limite par ailleurs le risque de rebond de l'assise du siège vers l'occupant grâce à la déformation des lames 12a,12b et au profil d'érosion qu'elles génèrent sur les plaques 18a,18b.

Bien entendu chaque montant 2a de l'assise pourra incorporer un moyen d'amortissement 12,20a,20b.

Avantageusement le moyen d'amortissement de la course pourra incorporer un moyen de blocage anti retour qui interdira de façon certaine le rebond de l'assise 2.

Comme moyen de blocage anti retour on pourra par exemple prévoir des indentations (non représentées) portées par les profils inclinés 20a et 20b des plaques 18a et 18b.

A titre de variante, les profils inclinés 20a et 20b pourront être portés par le support 3 lui-même et non par des plaques fixées au support.

On pourra également à titre de variante remplacer la chape 12 par une lame unique 12a qui coopèrera avec une plaque 18a.

On a noté que la ou les plaques 18a, 18b sont fixées au support d'une façon démontable. Une telle disposition permet de donner au siège des moyens d'amortissement dont les caractéristiques peuvent être adaptées en fonction des besoins, sans qu'il soit pour autant nécessaire de redéfinir complètement le siège. On peut ainsi remplacer les plaques fixées initialement par d'autres plaques comportant un profil incliné ayant une pente différente. On modifie ainsi les caractéristiques de l'amortissement, la déformation des lames 12a, 12b par les plaques devenant plus ou moins forte. On peut également remplacer les plaques par des plaques dont la surface de butée 21a est positionnée plus ou moins loin du bord inférieur de la plaque. On modifie ainsi l'angle d'ouverture maximal possible pour l'assise.

A titre de variante on pourra également définir un moyen d'amortissement dans lequel on ne déforme pas une chape solidaire de l'assise avec des surfaces fixes portées par le support mais on définit une structure symétrique dans laquelle un élément rigide porté par l'assise vient déformer un moyen, solidaire du support, et dont la déformation vient consommer l'énergie du pivotement et réaliser un blocage en rotation par la déformation des pièces.

## Revendications

1. Siège (1) pour véhicule, comportant une assise (2) montée pivotante par rapport à au moins un support fixe (3) entre une position repliée où elle est sensiblement verticale et une position dépliée où elle est en appui sur au moins une première butée (8b) et se trouve sensiblement horizontale, l'assise coopérant avec le (ou les) support(s) fixe(s) par un moyen assurant en cas d'effort d'un niveau prédéterminé la libération de la (ou des) première(s) butée(s) (8b) et le pivotement de l'assise au-delà de la position déployée, siège ***caractérisé en ce* qu'**il comprend au moins un moyen d'amortissement (12,18a) de la course de l'assise (2) après libération de la (ou des) première(s) butée(s) (8b).

2. Siège pour véhicule selon la revendication 1, **caractérisé en ce qu'**il comprend au moins une deuxième butée (21a) limitant l'ouverture maximale de l'assise.

3. Siège pour véhicule selon une des revendications 1 ou 2, **caractérisé en ce que** le moyen d'amortissement (12,18a) de la course incorpore un moyen de blocage anti retour.

4. Siège pour véhicule selon une des revendications 1 à 3, **caractérisé en ce que** le moyen d'amortissement de la course comprend au moins une lame (12a,12b) coopérant lors du pivotement de l'assise avec au moins une surface comportant un profil incliné (20a,20b) venant interférer avec la lame (12a,12b) lors du mouvement de pivotement, provoquant ainsi le fléchissement de la lame, la ou les lames et le ou les profils inclinés formant le moyen d'amortissement de la course de l'assise.

5. Siège pour véhicule selon la revendication 4, **caractérisé en ce que** la surface coopérant avec la lame est portée par une plaque (18a,18b) ayant un plan sensiblement perpendiculaire au plan de la lame (12a,12b).

6. Siège pour véhicule selon la revendication 5, **caractérisé en ce que** la ou les plaques (18a,18b) sont fixées de façon démontable.

7. Siège pour véhicule selon une des revendications 4 à 6, **caractérisé en ce que** le profil incliné (20a,20b) de la plaque (18a,18b) se termine par une saillie (21a) formant la deuxième butée.

8. Siège pour véhicule selon une des revendications 4 à 7, **caractérisé en ce que**, la ou les plaques (18a,18b) sont solidaires du support fixe et la ou les lames (12a,12b) sont solidaires de l'assise (2).

9. Siège pour véhicule selon la revendication 8, **caractérisé en ce que** le moyen d'amortissement de la course de l'assise comprend au moins une chape (12) formée de deux lames (12a,12b) qui coopèrent chacune avec une surface du support fixe comportant un profil incliné (20a,20b) venant interférer avec ladite lame lors du mouvement de pivotement.

10. Siège pour véhicule selon une des revendications 1 à 9, **caractérisé en ce que** la première butée (8b) coopère avec un axe (9) ayant une réduction de section (9a) calibrée et venant en appui contre la première butée (8b), lors du pivotement de l'assise et avant engagement du moyen d'amortissement de la course.

## Patentansprüche

1. Sitz (1) für ein Fahrzeug, mit einer Sitzbasis (2), die in Bezug auf mindestens einen festen Träger (3) zwischen einer eingeklappten Position, in der sie im Wesentlichen vertikal ist, und einer ausgeklappten Position, in der sie auf mindestens einem ersten Anschlag (8b) aufliegt und im Wesentlichen horizontal ist, schwenkbar montiert ist, wobei die Sitzbasis mit dem (den) festen Träger(n) durch ein Mittel zusammenwirkt, die im Falle einer Kraft eines vorbestimmten Niveaus die Freigabe des (der) ersten Anschlags (Anschläge) (8b) und das Schwenken der Sitzbasis über die entfaltete Position hinaus sicherstellt, wobei der Sitz **dadurch gekennzeichnet ist, dass** er mindestens ein Mittel (12, 18a) zur Dämpfung des Weges der Sitzbasis (2) nach der Freigabe des ersten Anschlags (Anschläge) (8b) umfasst.

2. Sitz für ein Fahrzeug gemäß Anspruch 1, **dadurch gekennzeichnet, dass** er wenigstens einen zweiten Anschlag (21a) aufweist, der die maximale Öffnung der Sitzbasis begrenzt.

3. Sitz für ein Fahrzeug gemäß einem der Ansprüche 1 oder 2, **dadurch gekennzeichnet, dass** das Mittel (12, 18a) zur Dämpfung des Weges ein Anti-Rückschlagssperrmittel aufweist.

4. Sitz für ein Fahrzeug gemäß einem der Ansprüche 1 bis 3, **dadurch gekennzeichnet, dass** das Mittel zur Dämpfung des Weges wenigstens eine Klinge (12a, 12b) umfasst, die beim Schwenken der Sitzbasis mit wenigstens einer Oberfläche zusammenwirkt, die ein geneigtes Profil (20a, 20b) umfasst, das bei der Schwenkbewegung mit der Klinge (12a, 12b) interferiert und somit das Durchbiegen der Klinge hervorruft, wobei die Klinge(n) oder das geneigte Profil oder die geneigten Profile das Mittel zur Dämpfung des Weges der Sitzbasis bildet oder bilden.

5. Sitz für Fahrzeug gemäß Anspruch 4, **dadurch gekennzeichnet, dass** die Oberfläche, die mit der Klinge zusammenwirkt, von einer Platte (18a, 18b) getragen ist, die eine Ebene aufweist, die im Wesentlichen senkrecht zur Ebene der Klinge (12a, 12b) stent.

6. Sitz für Fahrzeug gemäß Anspruch 5, **dadurch gekennzeichnet, dass** die Platte(n) (18a, 18b) abnehmbar befestigt ist oder sind.

7. Sitz für Fahrzeug gemäß einem der Ansprüche 4 bis 6, **dadurch gekennzeichnet, dass** das geneigte Profil (20a, 20b) der Platte (18a, 18b) in einem des zweiten Anschlag bildenden Vorsprung (21a) endet.

8. Sitz für Fahrzeug gemäß einem der Ansprüche 4 bis 7, **dadurch gekennzeichnet, dass** die Platte(n) (18a, 18b) fest mit dem festen Träger verbunden ist oder sind und die Klinge(n) (12a, 12b) fest mit der Sitzfläche (2) verbunden ist oder sind.

9. Sitz für Fahrzeug gemäß Anspruch 8, **dadurch gekennzeichnet, dass** das Mittel zur Dämpfung des Weges der Sitzbasis wenigstens eine Gabel (12) umfasst, die aus zwei Klingen (12a, 12b) gebildet ist, die jeweils mit einer Oberfläche des festen Trägers zusammenwirken, der ein geneigtes Profil (20a, 20b) aufweist, das bei der Schwenkbewegung mit der genannten Klinge interferiert.

10. Sitz für Fahrzeug gemäß einem der Ansprüche 1 bis 9, **dadurch gekennzeichnet, dass** der erste Anschlag (8b) mit einer Achse (9) zusammenwirkt, die eine Querschnittsverengung (9a) aufweist, die geeicht ist und beim Schwenken der Sitzbasis und vor dem Einrasten des Mittels zur Dämpfung des Weges gegen den ersten Anschlag (8b) zur Anlage kommt.

## Claims

1. A vehicle seat (1), including a seat part (2) pivotably mounted relative to at least one fixed support (3) between a folded position in which it is substantially vertical and an unfolded position in which it bears against at least one first stop (8b) and lies substantially horizontal, the seat part cooperating with the fixed support(s) by a means ensuring, in the case of a load of a predetermined level, the release of the first stop(s) (8b) and pivoting of the seat part beyond the extended position, the seat being **characterised in that** it comprises at least one means (12, 18a) for damping the stroke of the seat part (2) after releasing the first stop(s) (8b).

2. The vehicle seat according to claim 1, **characterised in that** it comprises at least one second stop (21a) limiting maximum opening of the seat part.

3. The vehicle seat according to one of claims 1 or 2, **characterised in that** the means (12, 18a) for damping the stroke incorporates a non-return blocking means.

4. The vehicle seat according to one of claims 1 to 3, **characterised in that** the means for damping the stroke comprises at least one blade (12a, 12b) cooperating, when the seat part pivots, with at least one surface including a tilted profile (20a, 20b) interfering with the blade (12a, 12b) during the pivoting motion, thus causing the blade to bend, the blade(s) and tilted profile(s) forming the means for damping the stroke of the seat part.

5. The vehicle seat according to claim 4, **characterised in that** the surface cooperating with the blade is carried by a plate (18a, 18b) having a plane substantially perpendicular to the plane of the blade (12a, 12b) .

6. The vehicle seat according to claim 5, **characterised in that** the plate(s) (18a, 18b) is (are) detachably fastened.

7. The vehicle seat according to one of claims 4 to 6, **characterised in that** the tilted profile (20a, 20b) of the plate (18a, 18b) ends with a projection (21a) forming the second stop.

8. The vehicle seat according to one of claims 4 to 7, **characterised in that**, the plate (s) (18a, 18b) is (are) integral with the fixed support and the blade (s) (12a, 12b) is (are) integral with the seat part (2).

9. The vehicle seat according to claim 8, **characterised in that** the means for damping the stroke of the seat part comprises at least one yoke (12) formed by two blades (12a, 12b), each cooperating with a surface of the fixed support including a tilted profile (20a, 20b) interfering with said blade during the pivoting motion.

10. The vehicle seat according to one of claims 1 to 9, **characterised in that** the first stop (8b) cooperates with a pin (9) having a calibrated area reduction (9a) and bearing against the first stop (8b), upon pivoting the seat part and prior to engaging the means for damping the stroke.
